# EUROPEAN PATENT APPLICATION

(11) **EP 4 738 308 A2**
(43) Date of publication of application: **06.05.2026**
(21) Application number: 25207680.7
(22) Date of filing: 09.10.2025
(51) Int. Cl.: G08G 1/0967, G08G 1/16, G08G 1/00

(54) **5G-NR-V2X PLATOONING APPLICATION SERVICE COMMUNICATION METHOD**

(30) Priority: 11.10.2024 KR 20240138756
(71) Applicant: Korea Electronics Technology Institute, Bundang-gu, Seongnam-si Gyeonggi-do 13509 (KR)
(72) Inventor: AN, Byoung Man, 13587 Seongnam-si (KR); JANG, Seong Hyun, 16843 Yongin-si (KR); SHIN, Dae Kyo, 13567 Seongnam-si (KR); JANG, Soo Hyun, 16825 Yongin-si (KR); JANG, Jun Hyek, 16002 Uiwang-si (KR); WANG, Yoo Seung, 16004 Uiwang-si (KR)
(74) Representative: Isarpatent

(57) **Abstract**

Provided is a 5G-NR-V2X platooning application service communication method. A platooning communication method according to an embodiment may include: creating, by a lead vehicle, platooning according to negotiations with a follow vehicle; executing, by the lead vehicle, the created platooning with the follow vehicle; and withdrawing, by the lead vehicle, the follow vehicle from the platooning. Accordingly, platooning is enabled based on safe and accurate determination through clear information exchange between platooning vehicles or between platooning vehicles and infrastructures, and more efficient and effect platooning services are enabled through support of joining/disjoining between platooning groups.

## Description

### BACKGROUND

### FIELD

The disclosure relates to a platooning protocol, and more particularly, to a communication method and system for performing platooning in a 5G-NR-V2X communication environment.

### DESCRIPTION OF RELATED ART

Platooning refers to a method for driving several vehicles in a group, and requires efficient communication between a lead vehicle and a following vehicle. Safe platooning may be guaranteed by continuously collecting information on distances to neighboring vehicles, speeds, directions, etc. and sharing the information. In addition, through communication with roadside base stations, the performance of platooning may be optimized and additional services may be provided.

Until now, the research and development of platooning technology has been limited to vehicles of specific manufacturers, specific national projects (cooperative-intelligent transport system (C-ITS) project, etc.). Accordingly, standardized protocols in driving environments are still being defined or are not supported, and there are restrictions on implementation, and vehicle manufacturers, research institutes, etc. are implementing protocols by defining themselves or are temporarily using extended areas of standards.

Due to the characteristics of these technologies, they are used only by specific companies and require security, so that there are many parts that are not open to suit various service and they tend to be closed.

### SUMMARY

The disclosure has been developed in order to solve the above-described problems, and an object of the disclosure is to provide a platooning communication method which enables accurate and safe platooning by exchanging standardized information between vehicles and between vehicles and infrastructures, and a platooning system applying the same.

To achieve the above-described object, a platooning communication method according to an embodiment of the disclosure may include: creating, by a lead vehicle, platooning according to negotiations with a follow vehicle; executing, by the lead vehicle, the created platooning with the follow vehicle; and withdrawing, by the lead vehicle, the follow vehicle from the platooning.

Creating the platooning may include: discovering, by the lead vehicle, a vehicle to join a platooning group; notifying, by the follow vehicle, the platooning group of the joining; determining, by the lead vehicle, to create the platooning group; negotiating, by the lead vehicle, with the follow vehicle about the platooning; and setting up, by the lead vehicle, the platooning according to negotiations, and creating the platooning.

Withdrawing from the platooning may include: requesting, by the lead vehicle, the follow vehicle to withdraw from the platooning group; accepting, by the follow vehicle, the withdrawal from the platooning group, and executing the withdrawal; and setting up, by the lead vehicle, platooning excluding the follow vehicle.

According to an embodiment, the platooning communication method may further include: when it is recognized that a general vehicle changes lanes in front of the lead vehicle, braking, by the lead vehicle, by actuating a brake; notifying, by the lead vehicle, the follow vehicle of the emergency braking situation; braking, by the follow vehicle, by actuating a brake; and responding, by the follow vehicle, to the lead vehicle about completion of the braking.

According to an embodiment, the platooning communication method may further include: controlling, by the lead vehicle, the platooning based on traffic light information and pedestrian information; controlling, by the follow vehicle, the vehicle under control by the lead vehicle; transmitting, by the lead vehicle, the pedestrian information and brake information to a C-ITS; and transmitting and sharing, by the C-ITS, the pedestrian information and brake information to and with other vehicles connected.

Controlling may further include: determining, by the lead vehicle, whether it is possible to pass an intersection based on a remaining signal time; when it is determined that it is possible to pass the intersection, instructing, by the lead vehicle, the follow vehicle to accelerate; when it is determined that it is impossible to pass the intersection within the remaining signal time, instructing, by the lead vehicle, the follow vehicle to brake; and, when it is determined there is a vulnerable road user at the intersection, instructing, by the lead vehicle, the follow vehicle to brake.

According to an embodiment, the platooning communication method may further include: transmitting, by a lead vehicle- A of a platooning group-A and a lead vehicle-B of a platooning group-B, information on the platooning groups to a control center; determining, by the control center, whether it is possible for the platooning group-B to join the platooning group-A; when it is determined that it is possible to join, notifying, by the control center, the lead vehicles-A, B of the platooning groups-A, B of a joining point and time; requesting, by the lead vehicle-A, the lead vehicle-B to join; controlling, by the lead vehicles-A, B, follow vehicles in order to let the platooning group-B join the platooning group-A; and controlling, by the lead vehicle-A of the platooning group A+B, platooning of the platooning group A+B.

According to an embodiment, the platooning communication method may further include: requesting, by the lead vehicle-A, the control center to disjoin the platooning group-B from the joined platooning group A+B; when the disjoining from the joined platooning group A+B is determined, transmitting, by the control center to the lead vehicle-A of the joined platooning group A+B, a disjoining point and time of the joined platooning group A+B; requesting, by the lead vehicle-A, the lead vehicle-B of the platooning group-B to disjoin from the platooning; responding, by the lead vehicle-B, to the lead vehicle-A about the disjoining from the platooning group-B; and controlling, by the lead vehicles-A, B, follow vehicles in order to disjoin the platooning group-B.

According to an embodiment, the platooning communication method may further include: when the disjoining is completed, transmitting, by the lead vehicle-A, B, a result of disjoining to the control center; and controlling, by the lead vehicles-A, B, the follow vehicles to perform respective platooning.

According to another embodiment of the disclosure, a platooning system may include: a lead vehicle configured to create platooning according to negotiations with a follow vehicle, to execute the created platooning with the follow vehicle, and to withdraw the follow vehicle from the platooning; and a follow vehicle configured to negotiate with the lead vehicle with platooning, to execute the created platooning, and to withdraw from the platooning according to a request of the lead vehicle.

According to still another embodiment of the disclosure, a platooning communication method may include: transmitting, by a lead vehicle-A of a platooning group-A and a lead vehicle-B of a platooning group-B, information on the platooning groups to a control center; determining, by the control center, whether it is possible for the platooning group-B to join the platooning group-A; when it is determined that it is possible to join, notifying, by the control center, the lead vehicles-A, B of the platooning groups-A, B of a joining point and time; requesting, by the lead vehicle-A, the lead vehicle-B to join; controlling, by the lead vehicles-A, B, follow vehicles in order to let the platooning group-B join the platooning group-A; and controlling, by the lead vehicle-A of the platooning group A+B, platooning of the platooning group A+B.

According to embodiments of the disclosure as described above, platooning may be enabled based on safe and accurate determination through clear information exchange between platooning vehicles or between platooning vehicles and infrastructures.

According to embodiments of the disclosure, joining/disjoining between platooning groups may be supported so that it is possible to provide more efficient and effective platooning services.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a view illustrating a method for joining/executing/grouping platooning according to an embodiment of the disclosure;
FIG. 2 is a view illustrating a platooning control method when a general vehicle changes lanes according to another embodiment of the disclosure;
FIG. 3 is a view illustrating a platooning control method at an intersection based on traffic light information and pedestrian information according to still another embodiment of the disclosure;
FIG. 4 is a view illustrating a platooning group joining method using a control center and a roadside base station according to yet another embodiment of the disclosure; and
FIGS. 5 and 6 are views illustrating a platooning group joining method using a control center and a roadside base station according to a further embodiment of the disclosure.

### DETAILED DESCRIPTION

Hereinafter, the disclosure will be described in more detail with reference to the accompanying drawings.

Embodiments of the disclosure provide a platooning application service communication method. The disclosure relates to a technology for a communication protocol that enables more effective and stable platooning in communication environments, such as 5G-Uu, 5G-NR-V2X, which have been actively researched and developed and commercialized recently.

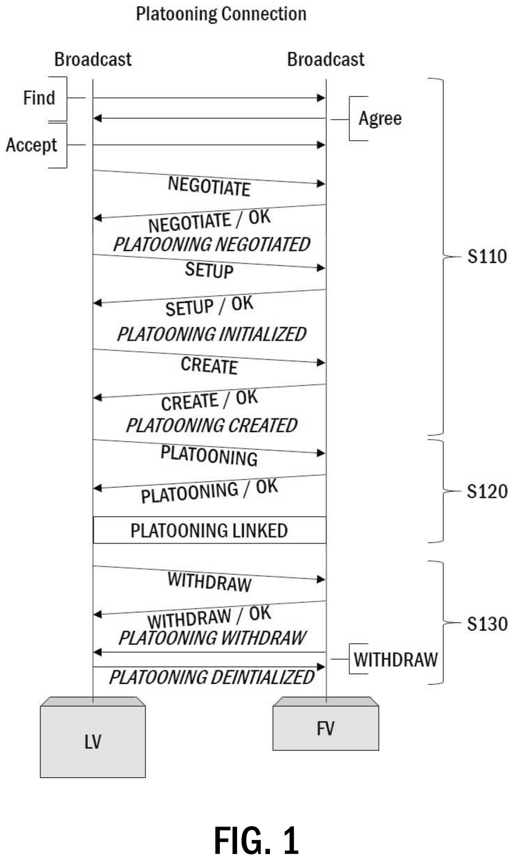

FIG. 1 is a view to explain a platooning communication method according to an embodiment of the disclosure. FIG. 1 illustrates a process of joining a platooning group, executing platooning, and withdrawing from the platooning group in detail.

As shown in the drawing, a lead vehicle LV may create platooning according to negotiations with a follow vehicle FV (S110). Creating the platooning may be performed by the processes of: 1) Finding, by the lead vehicle LV, a vehicle to join the platooning group; 2) when the follow vehicle FV agrees joining of the platooning group, 3) accepting, by the lead vehicle LV, to create the platooning group; 4) negotiating, by the lead vehicle LV, with the follow vehicle FV about platooning; and 5) setting up, by the lead vehicle LV, platooning according to negotiations and creating platooning.

The lead vehicle LV and the follow vehicle FV may execute the platooning created in step S110 (S120). The lead vehicle LV may let the follow vehicle FV withdraw from the platooning (S130) when necessary. Withdrawing from the platooning may be performed by the processes of: 1) when the lead vehicle LV requests the follow vehicle FV to withdraw from the platooning group, 2) accepting/performing, by the follow vehicle FV, the withdrawal from the platooning group; and 3) setting up, by the lead vehicle LV, platooning excluding the follow vehicle FV.

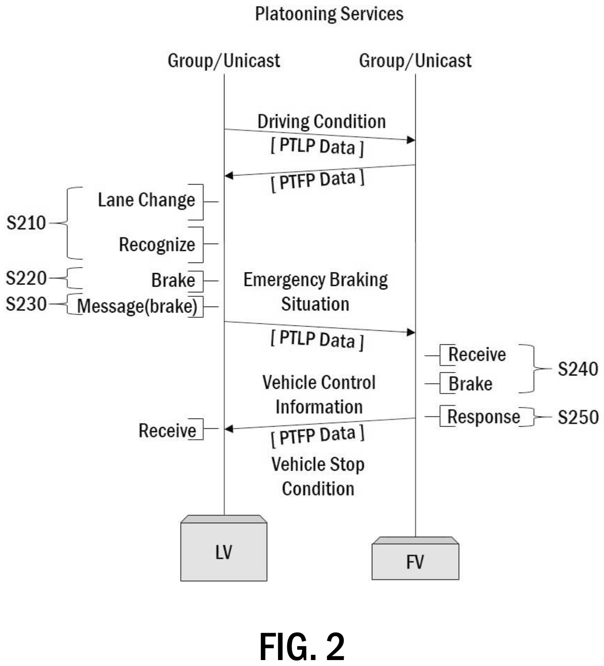

FIG. 2 is a view to explain a platooning communication method according to another embodiment of the disclosure. FIG. 2 illustrates a process of controlling platooning when a general vehicle changes lanes in detail.

As shown in the drawing, when the lead vehicle recognizes that a general vehicle changes lanes in front thereof (S210), the lead vehicle LV may brake by actuating a brake (S220) and may notify the follow vehicle FV of the emergency braking situation (S230). In FIG. 2, a message that the lead vehicle LV sends to the follow vehicle FV is represented by platooning lead protocol (PTLP) data.

The follow vehicle FV brakes by actuating a brake (S240), and responds to the lead vehicle LV about completion of the braking (S250). In FIG. 2, a message that the follow vehicle FV sends to the lead vehicle LV is represented by platooning following protocol (PTFP) data.

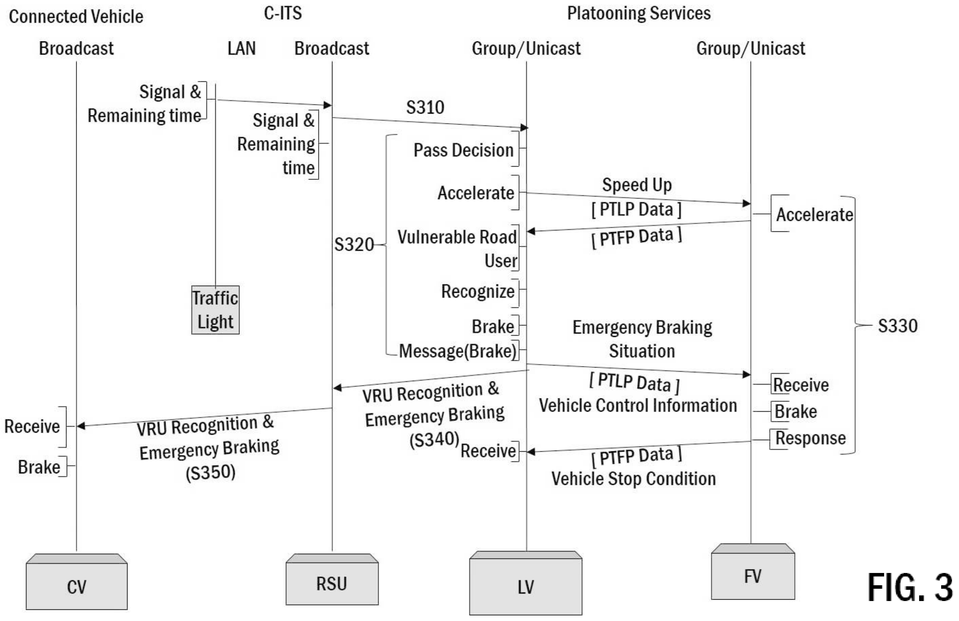

FIG. 3 is a view to explain a platooning communication method according to still another embodiment of the disclosure. FIG. 3 illustrates a process of controlling platooning at an intersection based on traffic light information and pedestrian information in detail.

As shown in the drawing, a cooperative-intelligent transport system (C-ITS) may acquire traffic light information and transmit the same to the lead vehicle LV of the platooning group (S310). The traffic light information may be acquired from connected traffic lights, and may include information on traffic light statuses (red, green) and remaining signal time.

The lead vehicle LV may control platooning based on the traffic light information received in step S310, and pedestrian information acquired by itself (S320), and the follow vehicle FV may control the vehicle under control by the lead vehicle LV in step S320. Controlling the platooning may be performed by the following two operations.

The first operation is controlling the follow vehicle FV by using traffic light information. Specifically, 1) the lead vehicle LV may determine whether it is possible to pass the interaction based on a remaining signal time, and 2), when it is determined that it is possible to pass the intersection, the lead vehicle LV may instruct the follow vehicle FV to accelerate and pass the intersection fast.

The second operation is controlling the follow vehicle FV by further using pedestrian information in addition to the traffic light information. Specifically, the lead vehicle LV may instruct the follow vehicle FV to brake when it is determined that there is a vulnerable road user at the intersection. In addition, the lead vehicle LV may instruct the follow vehicle FV to brake even when it is determined that it is impossible to pass the intersection within a remaining signal time.

Meanwhile, the lead vehicle LV may transmit the pedestrian information and the brake information to the C-ITS (S340), and the C-ITS may transmit and share the pedestrian information and the brake information received at step S340 to and with other vehicles connected (S350).

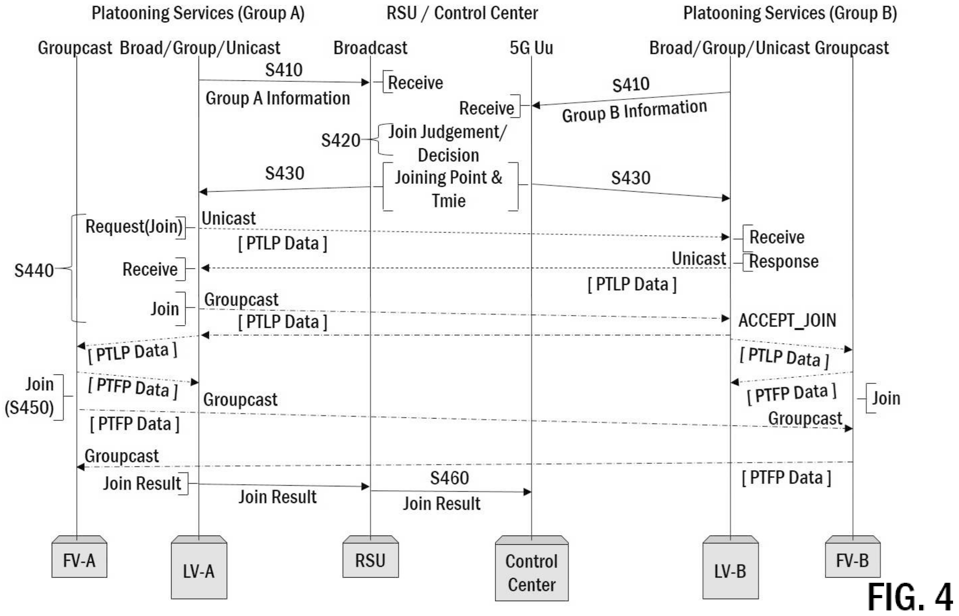

FIG. 4 is a view to explain a platooning communication method according to yet another embodiment of the disclosure. FIG. 4 illustrates a platooning group joining process using a control center and a roadside base station in detail.

As shown in the drawing, a lead vehicle LV-A of a platooning group A and a lead vehicle LV-B of a platooning group B may transmit information of their own platooning groups to a control center via a roadside base station (roadside unit (RSU)) (S410). The information of the platooning group may include the current location, route, and speed of the platooning group.

The control center may determine whether it is possible for the platooning group B to join the platooning group A, based on the current locations, routes, speeds of the platooning groups A, B, received through step S410 (S420).

When it is determined that it is possible to join in step S420, the control center may notify the lead vehicles LV-A, B of the platooning groups A, B of a joining point and time (S430). The joining point and time may be predicted by the control center based on the current locations, routes, and speeds of the platooning groups A, B.

The lead vehicle LV-A of the platooning group A may request the lead vehicle LV-B of the platooning group B to join, and the lead vehicle LV-B of the platooning group B may respond to the lead vehicle LV-A of the platooning group A about the joining (S440).

The lead vehicles LV-A, B of the platooning groups A, B may control follow vehicles FVs in order to let the platooning group B join the platooning group A (S450).

When the joining is completed, the lead vehicle LV-A of the platooning group A may transmit information on the joined platooning group A+B to the control center via the base station RSU (S460). The information on the joined platooning group A+B may include the current location, route, and speed of the joined platooning group A+B.

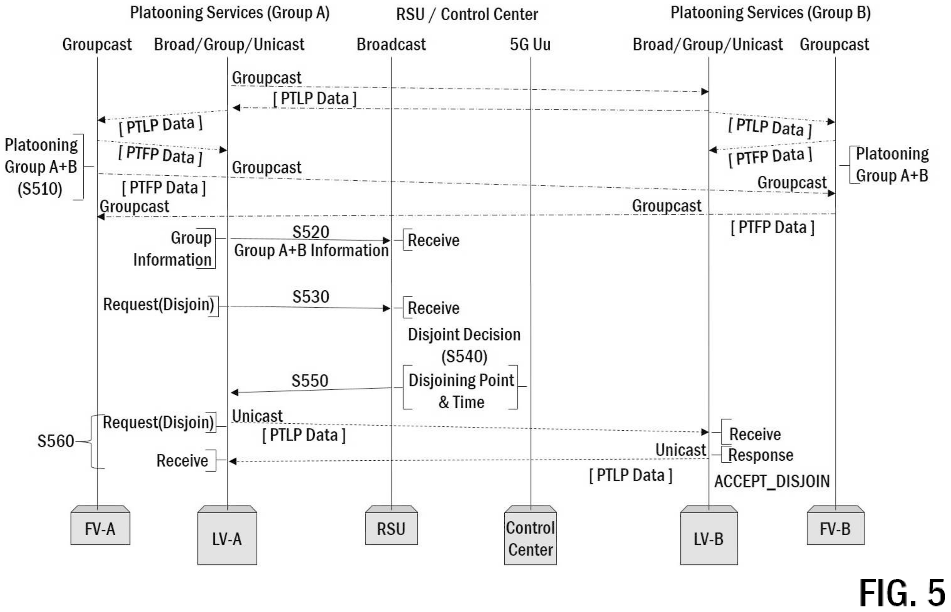

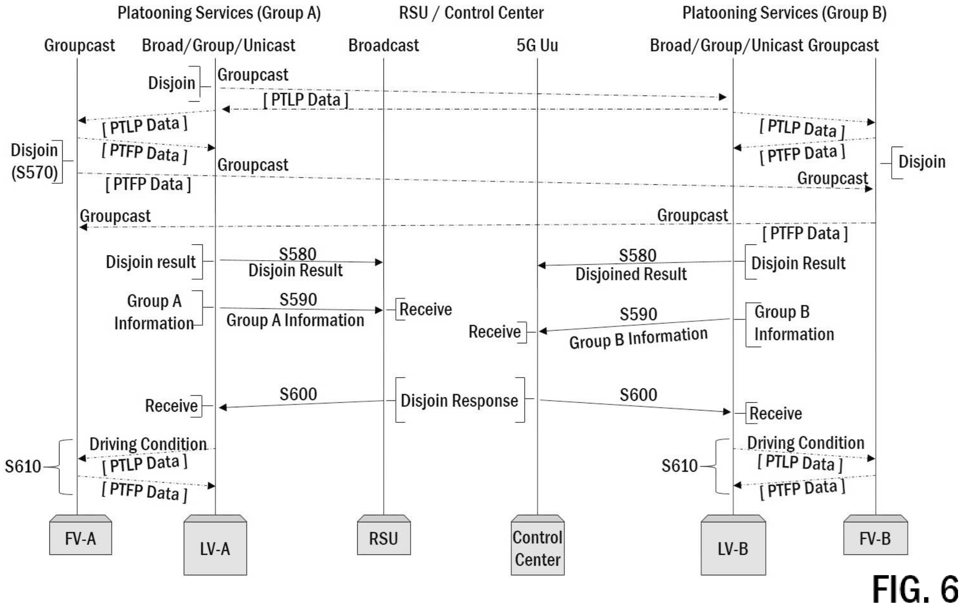

FIGS. 5 and 6 are views to explain a platooning communication method according to a further embodiment of the disclosure. FIGS. 5 and 6 illustrates a platooning group disjoining process using a control center and a roadside base station.

As shown in the drawing, platooning of the platooning group A+B may be controlled with reference to the lead vehicle LV-A of the joined platooning group A+B (S510). The lead vehicle LV-A may transmit the information on the joined platooning group A+B to the control center via the base station (S520).

The lead vehicle LV-A may request the control center to separate/disjoin the platooning group B from the joined platooning group A+B (S530). In response to this, the control center may determine whether to separate the joined platooning group A+B based on the information on the joined platooning group A+B (S540).

When the control center determines to separate the joined platooning group A+B, the control center may transmit a separating point and time of the joined platooning group A+B to the lead vehicle LV-A of the joined platooning group A+B (S550).

The lead vehicle LV-A of the platooning group A may request the lead vehicle LV-B of the platooning group B to disjoin from the platooning, and the lead vehicle LV-B may respond to the lead vehicle LV-A about the disjoining of the platooning group B (S560).

As shown in FIG. 6, the lead vehicles LV-A, B of the platooning groups A, B may control follow vehicles FVs in order to disjoin the platooning group B (S570). When the disjoining is completed, the lead vehicles LV-A, B of the platooning groups A, B may transmit the result of disjoining to the control center via the base station (S580), and may transmit information on the separated platooning groups A, B, respectively (S590).

In response to this, the control center may transmit a response to the lead vehicles LV-A, B of the platooning groups A, B (S600), and the lead vehicles LV-A, B of the platooning groups A, B may control the follow vehicles FVs to perform their respective platooning (S610).

Up to now, the platooning application service communication method has been described with reference to preferred embodiments.

The method according to the above-described embodiments enables platooning based on safe and accurate determination through clear information exchange between platooning vehicles or between platooning vehicles and infrastructures, and enables more efficient and effect platooning services through support of joining/disjoining between platooning groups.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. A platooning communication method comprising:
creating, by a lead vehicle, platooning according to negotiations with a follow vehicle;
executing, by the lead vehicle, the created platooning with the follow vehicle; and
withdrawing, by the lead vehicle, the follow vehicle from the platooning.

2. The platooning communication method of claim 1, wherein creating the platooning comprises:
discovering, by the lead vehicle, a vehicle to join a platooning group;
notifying, by the follow vehicle, the platooning group of the joining;
determining, by the lead vehicle, to create the platooning group;
negotiating, by the lead vehicle, with the follow vehicle about the platooning; and
setting up, by the lead vehicle, the platooning according to negotiations, and creating the platooning.

3. The platooning communication method of claim 1, wherein withdrawing from the platooning comprises:
requesting, by the lead vehicle, the follow vehicle to withdraw from the platooning group;
accepting, by the follow vehicle, the withdrawal from the platooning group, and executing the withdrawal; and
setting up, by the lead vehicle, platooning excluding the follow vehicle.

4. The platooning communication method of claim 1, further comprising:
when it is recognized that a general vehicle changes lanes in front of the lead vehicle, braking, by the lead vehicle, by actuating a brake;
notifying, by the lead vehicle, the follow vehicle of the emergency braking situation;
braking, by the follow vehicle, by actuating a brake; and
responding, by the follow vehicle, to the lead vehicle about completion of the braking.

5. The platooning communication method of claim 1, further comprising:
controlling, by the lead vehicle, the platooning based on traffic light information and pedestrian information;
controlling, by the follow vehicle, the vehicle under control by the lead vehicle;
transmitting, by the lead vehicle, the pedestrian information and brake information to a C-ITS; and
transmitting and sharing, by the C-ITS, the pedestrian information and brake information to and with other vehicles connected.

6. The platooning communication method of claim 5, wherein controlling further comprises:
determining, by the lead vehicle, whether it is possible to pass an intersection based on a remaining signal time;
when it is determined that it is possible to pass the intersection, instructing, by the lead vehicle, the follow vehicle to accelerate;
when it is determined that it is impossible to pass the intersection within the remaining signal time, instructing, by the lead vehicle, the follow vehicle to brake; and
when it is determined there is a vulnerable road user at the intersection, instructing, by the lead vehicle, the follow vehicle to brake.

7. The platooning communication method of claim 1, further comprising:
transmitting, by a lead vehicle- A of a platooning group-A and a lead vehicle-B of a platooning group-B, information on the platooning groups to a control center;
determining, by the control center, whether it is possible for the platooning group-B to join the platooning group-A;
when it is determined that it is possible to join, notifying, by the control center, the lead vehicles-A, B of the platooning groups-A, B of a joining point and time;
requesting, by the lead vehicle-A, the lead vehicle-B to join;
controlling, by the lead vehicles-A, B, follow vehicles in order to let the platooning group-B join the platooning group-A; and
controlling, by the lead vehicle-A of the platooning group A+B, platooning of the platooning group A+B.

8. The platooning communication method of claim 7, further comprising:
requesting, by the lead vehicle-A, the control center to disjoin the platooning group-B from the joined platooning group A+B;
when the disjoining from the joined platooning group A+B is determined, transmitting, by the control center to the lead vehicle-A of the joined platooning group A+B, a disjoining point and time of the joined platooning group A+B;
requesting, by the lead vehicle-A, the lead vehicle-B of the platooning group-B to disjoin from the platooning;
responding, by the lead vehicle-B, to the lead vehicle-A about the disjoining from the platooning group-B; and
controlling, by the lead vehicles-A, B, follow vehicles in order to disjoin the platooning group-B.

9. The platooning communication method of claim 8, further comprising:
when the disjoining is completed, transmitting, by the lead vehicle-A, B, a result of disjoining to the control center; and
controlling, by the lead vehicles-A, B, the follow vehicles to perform respective platooning.

10. A platooning system comprising:
a lead vehicle configured to create platooning according to negotiations with a follow vehicle, to execute the created platooning with the follow vehicle, and to withdraw the follow vehicle from the platooning; and
a follow vehicle configured to negotiate with the lead vehicle with platooning, to execute the created platooning, and to withdraw from the platooning according to a request of the lead vehicle.

11. A platooning communication method comprising:
transmitting, by a lead vehicle- A of a platooning group-A and a lead vehicle-B of a platooning group-B, information on the platooning groups to a control center;
determining, by the control center, whether it is possible for the platooning group-B to join the platooning group-A;
when it is determined that it is possible to join, notifying, by the control center, the lead vehicles-A, B of the platooning groups-A, B of a joining point and time;
requesting, by the lead vehicle-A, the lead vehicle-B to join;
controlling, by the lead vehicles-A, B, follow vehicles in order to let the platooning group-B join the platooning group-A; and
controlling, by the lead vehicle-A of the platooning group A+B, platooning of the platooning group A+B.
